# EUROPEAN PATENT SPECIFICATION

(11) **EP 3 110 586 B1**
(45) Date of publication and mention of the grant of the patent: **05.10.2022**
(21) Application number: 15711862.1
(22) Date of filing: 23.02.2015
(51) Int. Cl.: B23D 57/00, B28D 1/08

(54) **MULTI-WIRE FRAME FOR CUTTING BLOCKS OF STONE MATERIAL IN SLABS**
MULTIDRAHTRAHMEN ZUM SCHNEIDEN VON STEINBLÖCKEN IN FLIESEN
STRUCTURE À FILS MULTIPLES PERMETTANT DE COUPER DES BLOCS DE PIERRE EN DALLES

(30) Priority: 24.02.2014 IT TV20140029
(43) Date of publication of application: 04.01.2017
(60) Divisional application: 22167913.7
(73) Proprietor: Toncelli, Dario, 36061 Bassano del Grappa (VI) (IT)
(72) Inventor: Toncelli, Dario, 36061 Bassano del Grappa (VI) (IT)
(74) Representative: Dragotti, Gianfranco
(86) International application number: PCT/IB2015/051346
(87) International publication number: WO 2015/125122

(56) References cited:
- WO-A1-2011/033541
- DE-A1- 19 722 123
- ES-A1- 2 125 145
- JP-A- S61 100 366
- TR-U- 201 210 695

## Description

The present invention relates to a multi-wire frame for cutting blocks of stone material into slabs, as per the preamble of claim 1.

In the prior art many types of multi-wire frame for cutting blocks of stone material are known, said frames comprising multi-pulley rollers or multi-groove drums, inside the grooves of which diamond wires for cutting blocks of stone material into slabs slide.

In the present description reference will be made explicitly to multi-groove drums, it being understood that the principles of the present invention may be applied equally well also to a multi-wire frame with multi-pulley rollers, as will become clear from the continuation of the present description.

An example of a multi-wire frame is illustrated in Italian patent application TV2006A000060 which describes a machine comprising two columns along each of which a slide supporting a multi-groove drum travels. The diamond wires travel over both the multi-groove drums, one of which is a motor-driven drum and the other one an idle transmission drum. The two multi-groove drums have large dimensions, in particular the diameter is greater than the height of the block to be cut.

The machine also has two multi-groove wire -guiding rollers or cylinders, each positioned in the vicinity of a multi-groove drum along the wire section which during machining is situated between the block to be cut and said multi-groove drum. The distance between the multi-groove wire -guiding drums is slightly greater than the maximum length of the blocks which can be sawn with the machine. The function of the wire -guiding rollers is that of keeping in alignment, parallel to each other, the diamond wires in the cutting zone, reacting to any transverse forces which tend to deviate the wires and preventing them from being displaced from the ideal trajectory; therefore the free section between the two wire -guiding rollers is only a few centimetres longer than the length of the block. Too large a distance between the wire -guiding rollers would affect the correct alignment of the wires during sawing of the blocks.

The multi-wire frames may also have other configurations, for example three small-size multi-groove drums may be envisaged, one drum located at the top vertex having not only a transmission function but also a wire -tensioning function so that the movement path of the wires preferably has a triangular configuration. There also exist frames with four small-size multi-groove drums located at the four corners of a rectangle, thus forming preferably a substantially rectangular movement path of the wires.

The machines of the prior art, although recognized as being valid, have a number of drawbacks and therefore do not always fully satisfy the user.

For example they have major limitations when it comes to cutting blocks of stone material with different dimensions.

As mentioned further above, if the distance between the wire -guiding rollers is slightly greater than the length of the block to be cut, the diamond wires are properly guided and during their cutting operation they maintain their straight position and consequently the cut is very precise.

If, however, the blocks have a length substantially smaller than the distance between the wire -guiding rollers, the latter will be located at a certain distance from the block to be cut so that there will be a section of diamond wire, of not insignificant length, situated between the wire -guiding rollers and the block. Along this path section, the wires will not be adequately guided and will have difficulty maintaining their straight position and, on the contrary, they may easily be displaced from their ideal arrangement. The cuts will therefore be much less precise compared to the situation previously described.

Therefore, in the case where blocks of varying length must be cut, not all the cuts will be performed in a precise manner. In particular, if blocks which have a length substantially smaller than the distance between the two wire -guiding rollers must be cut, the cuts will not be very precise.

One possible way of overcoming this drawback is to have two or more different-size machines each suitable for cutting a given range of lengths of the blocks, so as to be able to perform more precise cuts.

Obviously this solution is somewhat costly and requires a very large (open or closed) space able to accommodate several machines. Moreover, routine and extraordinary maintenance of the set of machines would become an extremely expensive item for the business activity concerned.

It is also evident that not even by providing several machines is it possible to have always the ideal distance between the wire -guiding rollers when there is a variation in the length of the blocks being machined.

It is for this reason that usually the most convenient solution is that of using a single cutting machine, accepting the fact that the cuts will not always be precise in the case where blocks which have a size substantially smaller than the distance between the two wire -guiding rollers must be cut.

A multi-wire frame as per the preamble of claim 1 is known from TR2012 10695 U.

The object of the invention is therefore to solve the problems of the prior art.

A further task of the present invention is to provide a multi-wire frame which is able to be adapted in a automatic and motorized manner to the length of the block to be cut.

The object and tasks are achieved with a multi-wire frame for cutting blocks of stone material according to the accompanying claims.

The characteristic features and advantages of a multi-wire frame according to the present invention will become clear from the description below of possible embodiments, provided solely by way of a non-limiting explanation, with reference to the accompanying drawings, in which:
Fig. 1 shows a schematic perspective view of a multi-wire frame according to the present invention;
Fig. 2 shows a front schematic view of the multi-wire frame according to Claim 1;
Figs. 3 and 4 show in schematic form a part of a multi-wire frame according to the present invention.

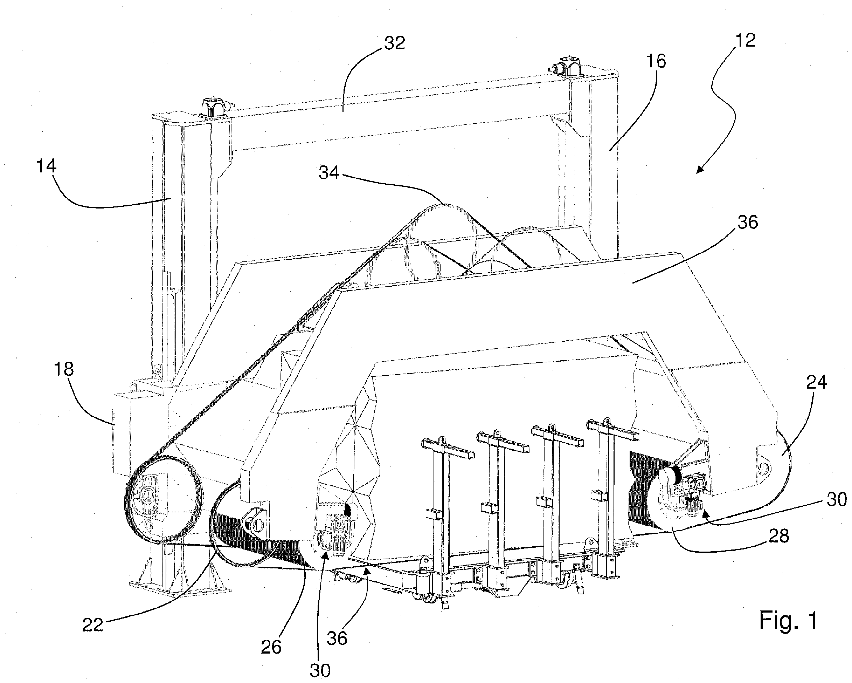

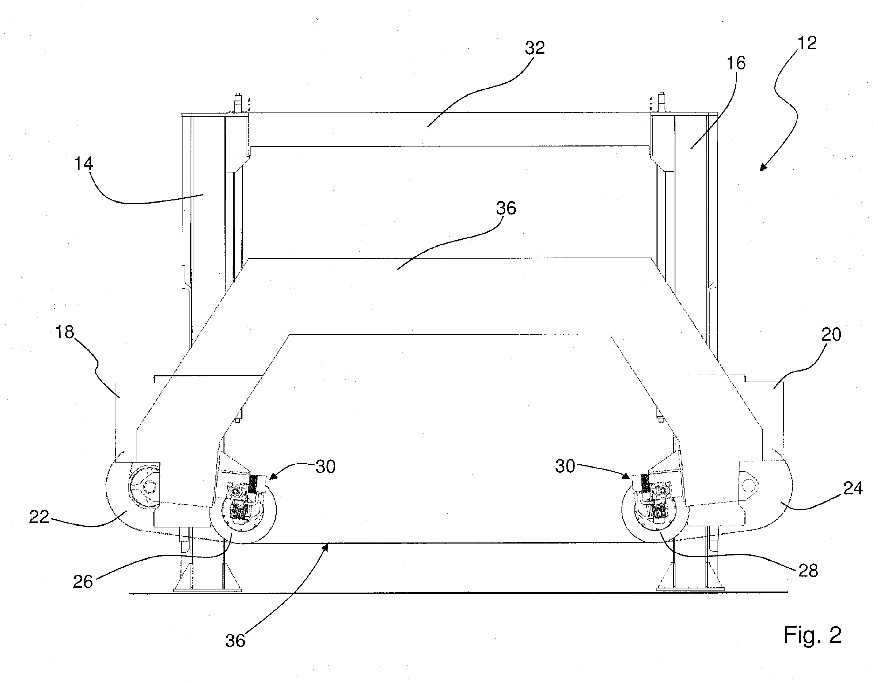

Figures 1 and 2 show a multi-wire frame according to the present invention denoted generally by the reference number 12.

The multi-wire frame 12 for cutting blocks of stone material comprises two columns 14, 16 each of which is provided with a slide 18, 20 designed to move along the respective column 14, 16. In accordance with a possible embodiment of the present invention, an upper cross-member 32 may be provided between the two columns 14, 16 so as to connect together the two top ends of the columns 14, 16 and reinforce the structure of the frame.

The slides 18, 20 may be of the type known per se to person skilled in the art and are equipped with at least one multi-groove drum 22, 24, one of which is motor-driven, while the other ones are idle transmission drums.

As mentioned above, in this description, a multi-groove drum 22, 24 is understood as meaning also a multi-pulley roller, for the sake of easier reference.

The multi-groove drums 22, 24 are designed to engage with a plurality of cutting wires which extend relative to each other, over a plurality of grooves in a manner known per se to the person skilled in the art, and which therefore will not further described.

For easier reference, in the accompanying figures the multi-groove drums are shown in schematic form, with the first groove and last groove.

In accordance with a first embodiment of the present invention (not shown in the accompanying drawings), the multi-groove drums 22, 24 are two in number, each provided on one of the slides 18, 20. Advantageously a pulley 34 is provided, said pulley not only having a transmission function, but also tensioning each diamond wire, thus creating a preferably substantially triangular movement path. The tensioning pulley 34 may be arranged on a cross-member 36 which joins together the two slides 18, 20.

In accordance with a further embodiment of the present invention (not shown in the accompanying drawings), the multi-groove drums may be four in number. Advantageously, each slide 18, 20 may be provided with two multi-groove drums so that the four multi-groove rollers are positioned at the corners of a rectangle, this forming a preferably substantially rectangular movement path.

Although the cutting wire in the operating condition is moving, from the arrangement of the multi-groove drums 22, 24 it is always possible to define a cutting section 36. The cutting section, as can be clearly seen in Figure 2, is the section lying between the two multi-groove drums 22, 24 which during operation exerts the cutting action on the block of stone material.

Wire -guiding rollers 26, 28 are provided in the vicinity of each multi-grove drum 22, 24, along the cutting section 36, said rollers being designed to guide the wires along the cutting section and withstand any horizontal/transverse forces which tend cause deviation of the cut from the ideal vertical path. The wire -guiding rollers 26, 28 are provided with a series of grooves positioned so as to be able to seat the diamond wires. Advantageously, the positioning of the diamond wires may be varied depending on the desired thickness of the slabs to be cut, normally about one centimetre at a time starting from a minimum thickness of about 2 centimetres. Advantageously, they may have the same length as the multi-wire drums 22, 24 so that their grooves correspond.

The multi-wire frame according to the present invention comprises movement means 30 for adjusting the distance between the wire-guiding rollers 26, 28.

The movement means 30 for adjusting the mutual distance between the wire -guiding rollers 26, 28 comprise a mechanism 30 of the motor-driven type which allows the movement of at least one wire -guiding roller 26, 28 towards or away from the respective multi-groove drum 22, 24.

In accordance with a first embodiment of the present invention, a wire - guiding roller 26, 28 is provided with a mechanism 30 which allows the movement of a single wire -guiding roller 26, 28 towards or away from the multi-groove drum 22, 24.

In accordance with an alternative embodiment of the present invention, both the wire -guiding rollers 26, 28 may be provided with a mechanism 30 which allows the movement of the wire -guiding roller 26, 28 towards or away from the respective multi-groove drum 22, 24.

The movement of the wire -guiding roller 26, 28 occurs along a direction inclined downwards.

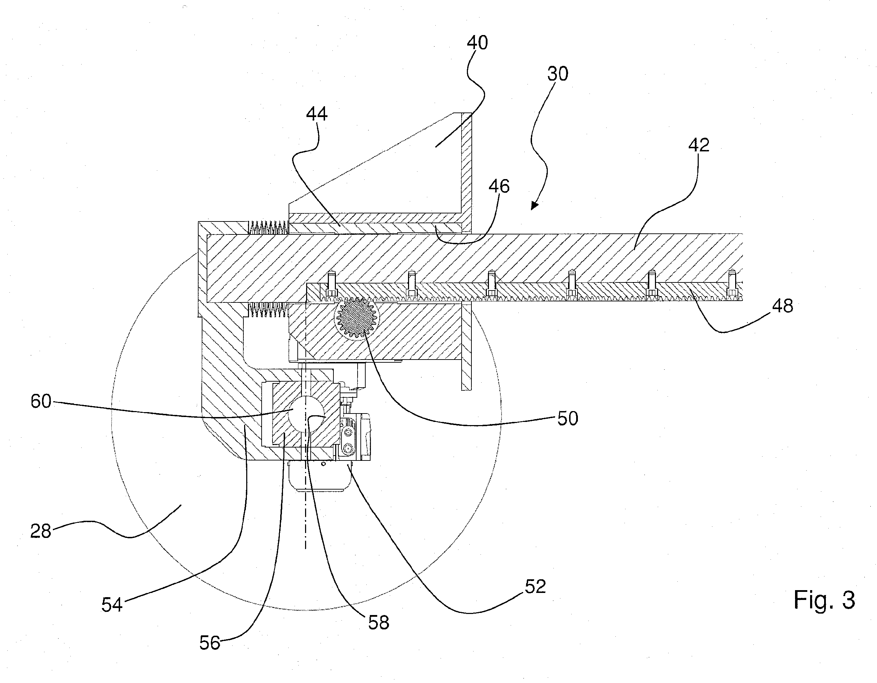

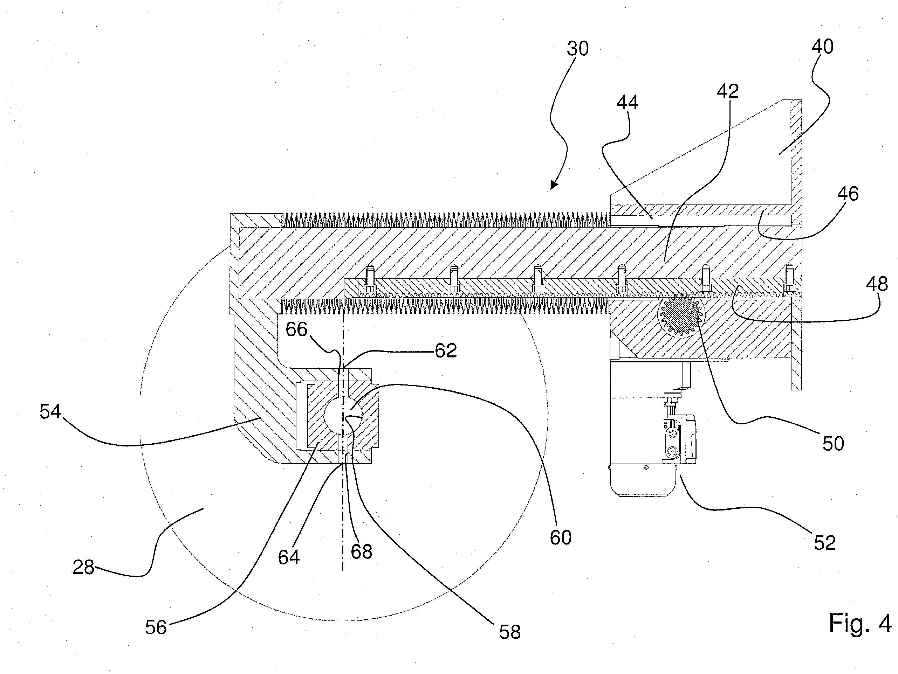

With reference to Figures 3 and 4, a possible embodiment of the mechanism 30 which allows the movement of the wire -guiding roller 26, 28 towards or away from the multi-groove drum 22, 24 will now be described.

Each mechanism 30 comprises a support structure 40. The support structure 40 is fixed to the slide 18, 20 In accordance with a possible embodiment of the present invention, not shown in the accompanying figures, the support structure 40 may be arranged slidingly on the respective column 14, 16

In accordance with the present invention the support structure 40 houses two bars 42 (in Figures 3 and 4 only one bar can be seen) located on the two opposite sides of the wire -guiding roller 26, 28. The two bars 42 may have a circular cross-section. Advantageously, the two bars slide, by means of bushes or bearings 44, inside corresponding cylindrical seats 46 provided in the support structure 40 and, at their ends, support the wire -guide roller 26, 28.

The two bars 43 are inclined a few degrees downwards so that, when the bars 42 are extracted, the angle of tangency of the wire with the wire- guiding roller remains constant and thus the winding arc also remains constant.

The bars may be provided with a rack 48. The rack 48 may be arranged directed downwards. In accordance with a possible embodiment of the present invention, each bar may be provided with a seat for a rack which may be removable, for example by means of screws, or fixed in a non-removable manner.

The rack is designed to mesh with a pinion 50 operated by a gear motor 52; it should also be noted that the rack 48 may also act as an anti-rotation element for the bar.

In accordance with a first embodiment of the present invention, the gear motor 52 is arranged on the support structure 40, as in the embodiments shown in the accompanying figures.

In accordance with an alternative embodiment of the present invention, the gear motor 52 may be arranged on a structure independent of the slide and designed to be displaced along the column.

Advantageously, the gear motors 52 may be two in number for each wire-guiding roller 26, 28, each of them with its own pinion 50 acting on a respective rack 48. The gear motors 52 of each wire -guiding roller 26, 28 are operated in synchronism so that the axis of the wire -guiding roller during the displacement always remains parallel to itself.

In accordance with the embodiment in which both the wire -guiding rollers 26, 28 are designed to move, all four gear motors 52 are designed to be operated in pairs in synchronism.

When the gear motors are operated, the associated pinions rotate and move the respective racks and therefore the bars in one direction or the other.

A support bracket 54 for the wire -guiding roller 26, 28 may be mounted at the free end of each bar 42.

In accordance with a possible embodiment of the present invention, two supports 56 may be mounted at the bottom end of the bracket 54, preferably in an pivoting manner about a vertical axis, said supports each having a cylindrical seat 58 inside which the two ends of the spindle 60 which rotatably supports the wire-guiding roller 26, 28 are inserted.

In accordance with a possible embodiment of the present invention the pivoting support may be provided with pins 62, 64 in the vertical direction, designed to be engaged with respective seats 66, 68 formed on the bottom end of the bracket 54 and corresponding seats formed on the support 56, as shown in Figure 3.

Each of the two ends of the spindle about which the wire -guiding roller rotates is inserted in a pivoting support. It is preferable for the support to be pivoting since, owing to the intrinsic elasticity of the system, the movement of the wire-guiding rollers might not be perfectly synchronous and therefore there is the possibility that a bar may project more than the other bar, preventing or hindering the movement of the wire -guiding rollers. Therefore, in order to avoid problems arising from imperfect synchronism, the end pins of each roller are able to pivot about a substantially vertical axis and a substantially horizontal axis.

In the configuration shown in Figure 3, the two bars and therefore the wire-guiding roller are fully retracted towards the outside of the frame, while in Figure 4 the two bars and therefore the wire -guiding roller are fully extended towards the inside of the frame.

In the first condition the frame is able to cut blocks with the maximum permitted size (length), while in the second position the frame is able to cut blocks with the minimum permitted size (length).

In accordance with a first embodiment of the present invention, the block of stone material which must be cut is positioned in the centre of the multi-wire frame, and both the wire -guiding rollers are both operated in a symmetrical manner such as to move closer together or away from each other.

The two wire -guiding rollers are moved depending on the length and position of the block to be cut and, in particular, are moved so as to be positioned as close as possible to the block. It is possible to provide automated systems equipped with detection means, for example detectors/transducers (encoders) of the type known per se to the person skilled in the art and designed to detect the length and position of the block, and a control unit integrated in the machine and designed to set automatically the distance of the wire -guiding rollers from the block to be cut.

The advantages of the present invention compared to the multi-wire frames of the prior art are therefore evident.

Firstly it is possible to predispose the multi-wire frame in such a way that it is fully adaptable to any size and position of the block to be cut. The diamond wires are guided perfectly and maintain their ideal straight position so that the cut performed will be very precise.

It is thus possible, when there is a variation in the length and position of the block to be cut, to position the two wire -guiding rollers in the position closest to the block to be cut and therefore manage to keep the diamond wires as straight as possible, obtaining very precise cuts.

The person skilled in the art, in order to satisfy specific requirements, may make modifications to the parts described and/ or replace them with equivalent parts, without thereby departing from the scope of the accompanying claims.

For example it is possible to envisage other movement systems of the motorized type for the wire- guiding rollers, such as hydraulic systems, worm screws, screws with lead nut, or other systems of a type known per se to the person skilled in the art.

## Claims

1. Multi-wire frame (12) for cutting blocks of stone material, comprising two columns (14, 16) each of which is provided with a slide (18, 20) designed to move along the respective column (14, 16),
each slide (18, 20) being provided with at least one multi-groove drum (22, 24) designed to engage with a plurality of cutting wires between the two slides (18, 20);
said multi-wire frame (12) being provided with two multi-groove wire-guiding rollers (26, 28) which are designed to guide the wires along the cutting section;
wherein the multi-wire frame (12) comprises movement means (30) for adjusting the distance between the multi-groove wire-guiding rollers (26, 28); and
**characterized in that** the movement means (30) are of the motorized type and comprise a mechanism (30) of the motor-driven type which allows the movement of at least one of said multi-groove wire-guiding rollers (26, 28) towards or away the respective multi-groove drum (22, 24), at least one of said multi-groove wire-guiding rollers (26, 28) being provided with the motor-driven mechanism (30); and
**in that** the movement of the wire-guiding roller (26, 28) occurs along a direction inclined downwards and the mechanism (30) comprises:
- a support structure (40) fixed to the slide (18, 20);
- two bars (42) located on the two opposite sides of the wire-guiding roller (26, 28) and designed to slide inside corresponding seats (46) provided in the support structure (40) and supporting said wire-guiding roller (26, 28);
the two bars (42) being inclined downwards so that, when the bars (42) are extracted, the angle of tangency of the wires with the wire-guiding roller remains constant and thus the winding arc also remains constant.

2. Multi-wire frame (12) according to Claim 1, **characterized in that** it comprises two multi-groove drums (22, 24), i.e. one motor-driven drum and one idle transmission drum, each arranged on one of the slides (18, 20).

3. Multi-wire frame (12) according to Claim 2, **characterized in that** it comprises a third roller located at the top vertex of a triangle and having, in addition to a transmission function, also a wire-tensioning function.

4. Multi-wire frame (12) according to Claim 1, **characterized in that** it comprises four multi-groove drums (22, 24), with two multi-groove drums being arranged on each slide (18, 20) so that the four multi-groove rollers are positioned at the corners of a rectangle.

5. Multi-wire frame (12) according to Claim 1, **characterized in that** both the multi-groove wire-guiding rollers (26, 28) are provided with the motor-driven mechanism (30) which allows the movement of the wire-guiding roller (26, 28) towards or away from the respective multi-groove drum (22, 24).

6. Multi-wire frame (12) according to Claim 1, **characterized in that** the two bars (42) are cylindrical.

7. Multi-wire frame (12) according to Claim 1, **characterized in that** the two bars (42) are arranged in the transverse direction.

8. Multi-wire frame (12) according to Claim 1, **characterized in that** the mechanism (30) for each bar (42) comprises a rack (48) and a gear motor (52) designed to operate a pinion (50) meshing with the rack and arranged on the support structure.

9. Multi-wire frame (12) according to the preceding claim, **characterized in that** the gear motors (52) are designed to be operated in synchronism.

10. Multi-wire frame (12) according to Claim 1, **characterized in that** a support (56) for the wire-guiding roller (26, 28) is mounted on the free end of each bar (42) in a manner pivoting about its axis and also about an axis perpendicular thereto.

11. Multi-wire frame (12) according to any one of the preceding claims, **characterized in that** it comprises detection means suitable for detecting the size and position of the block.

12. Multi-wire frame (12) according to Claim 11, **characterized in that** it comprises a control unit integrated in the machine and designed to set automatically the distance of the wire-guiding rollers from the block to be cut.

## Patentansprüche

1. Mehrfachdrahtgestell (12) zum Schneiden von Steinmaterialblöcken, bestehend aus zwei Säulen (14, 16), von denen jede mit einem Schlitten (18, 20) versehen ist, der gestaltet ist, sich entlang der jeweiligen Säule (14, 16) zu bewegen,
wobei jeder Schlitten (18, 20) mit mindestens einer Mehrrillen-Trommel (22, 24) versehen ist, die so gestaltet ist, dass sie mit einer Vielzahl von Schneiddrähten zwischen den beiden Schlitten (18, 20) in Eingriff gelangt;
wobei das Mehrfachdrahtgestell (12) mit zwei Mehrrillen-Drahtführungsrollen (26, 28) versehen ist, die dazu dienen, die Drähte entlang des Schneidabschnitts zu führen;
wobei das Mehrfachdrahtgestell (12) Bewegungsmittel (30) zum Einstellen des Abstands zwischen den Mehrrillen-Drahtführungsrollen (26, 28) aufweist; und
**dadurch gekennzeichnet, dass** die Bewegungsmittel (30) von motorisierter Art sind und einen Mechanismus (30) von motorgetriebener Art aufweisen, der die Bewegung von mindestens einer der Mehrrillen-Drahtführungsrollen (26, 28) zu der jeweiligen Mehrrillen-Trommel (22, 24) hin oder von ihr weg ermöglicht, wobei mindestens eine der Mehrrillen-Drahtführungsrollen (26, 28) mit dem motorgetriebenen Mechanismus (30) versehen ist; und
dadurch, dass die Bewegung der Drahtführungsrolle (26, 28) entlang einer Richtung erfolgt, die nach unten geneigt ist, und dass der Mechanismus (30) aufweist:
- eine am Schlitten (18, 20) befestigte Trägerstruktur (40);
- zwei Stäbe (42), die sich auf den beiden gegenüberliegenden Seiten der Drahtführungsrolle (26, 28) befinden und dazu eingerichtet sind, in entsprechenden Sitzen (46) zu gleiten, die in der Trägerstruktur (40) vorgesehen sind und die Drahtführungsrolle (26, 28) tragen;
die beiden Stäbe (42) nach unten geneigt sind, so dass beim Herausziehen der Stäbe (42) der Tangentenwinkel der Drähte mit der Drahtführungsrolle konstant bleibt und somit auch der Wickelbogen konstant bleibt.

2. Mehrfachdrahtgestell (12) nach Anspruch 1, **dadurch gekennzeichnet, dass** es zwei Mehrrillen-Trommeln (22, 24), d. h. eine Motorantriebstrommel und eine Leerlauftransmissionstrommel, aufweist, die jeweils auf einem der Schlitten (18, 20) angeordnet sind.

3. Mehrfachdrahtgestell (12) nach Anspruch 2, **dadurch gekennzeichnet, dass** es eine dritte Rolle aufweist, die an der oberen Spitze eines Dreiecks angeordnet ist und neben einer Übertragungsfunktion auch eine Drahtspannungsfunktion hat.

4. Mehrfachdrahtgestell (12) nach Anspruch 1, **dadurch gekennzeichnet, dass** es vier Mehrrillen-Trommeln (22, 24) aufweist, wobei auf jedem Schlitten (18, 20) zwei Mehrrillen-Trommeln angeordnet sind, so dass die vier Mehrrillen-Trommeln an den Ecken eines Rechtecks angeordnet sind.

5. Mehrfachdrahtgestell (12) nach Anspruch 1, **dadurch gekennzeichnet, dass** die beiden Mehrrillen-Drahtführungsrollen (26, 28) mit dem motorgetriebenen Mechanismus (30) versehen sind, der die Bewegung der Drahtführungsrolle (26, 28) auf die jeweilige Mehrrillen-Trommel (22, 24) zu oder von dieser weg ermöglicht.

6. Mehrfachdrahtgestell (12) nach Anspruch 1, **dadurch gekennzeichnet, dass** die beiden Stäbe (42) zylindrisch sind.

7. Mehrfachdrahtgestell (12) nach Anspruch 1, **dadurch gekennzeichnet, dass** die beiden Stäbe (42) in Querrichtung angeordnet sind.

8. Mehrfachdrahtgestell (12) nach Anspruch 1, **dadurch gekennzeichnet, dass** der Mechanismus (30) für jeden Stab (42) eine Zahnstange (48) und einen Zahnradmotor (52) aufweist, der dazu bestimmt ist, ein Ritzel (50) zu betätigen, das mit der Zahnstange in Eingriff steht und an der Trägerstruktur angeordnet ist.

9. Mehrfachdrahtgestell (12) nach dem vorhergehenden Anspruch, **dadurch gekennzeichnet, dass** die Zahnradmotoren (52) ausgelegt synchron betrieben zu werden.

10. Mehrfachdrahtgestell (12) nach Anspruch 1, **dadurch gekennzeichnet, dass** am freien Ende jedes Stabes (42) ein Träger (56) für die Drahtführungsrolle (26, 28) um seine Achse und auch um eine dazu senkrechte Achse schwenkbar gelagert ist.

11. Mehrfachdrahtgestell (12) nach einem der vorhergehenden Ansprüche, **dadurch gekennzeichnet, dass** es Erfassungsmittel aufweist, die geeignet sind, die Größe und die Position des Blocks zu erfassen.

12. Mehrfachdrahtgestell (12) nach Anspruch 11, **dadurch gekennzeichnet, dass** es eine in die Maschine integrierte Steuereinheit aufweist, die dazu bestimmt ist, den Abstand der Drahtführungsrollen von dem zu schneidenden Block automatisch einzustellen.

## Revendications

1. Armature à câbles multiples (12) destinée à découper des blocs de roche, comprenant deux colonnes (14, 16) qui sont chacune équipées d'un coulisseau (18, 20) conçu pour se déplacer le long de la colonne respective (14, 16),
chaque coulisseau (18, 20) étant équipé d'au moins un tambour à rainures multiples (22, 24) conçu pour s'engager avec une pluralité de câbles de découpe entre les deux coulisseaux (18, 20) ;
ladite armature à câbles multiples (12) étant équipée de deux galets de guidage de câbles à rainures multiples (26, 28) qui sont conçus pour guider les câbles le long de la section de découpe ;
dans laquelle l'armature à câbles multiples (12) comprend des moyens de déplacement (30) destinés à ajuster la distance entre les galets de guidage de câbles à rainures multiples (26, 28) ; et
**caractérisée en ce que** les moyens de déplacement (30) sont de type motorisé et comprennent un mécanisme (30) à entraînement par moteur qui permet le déplacement d'au moins l'un desdits galets de guidage de câbles à rainures multiples (26, 28) vers ou à l'écart du tambour à rainures multiples respectif (22, 24), au moins l'un desdits galets de guidage de câbles à rainures multiples (26, 28) étant équipé du mécanisme entraîné par moteur (30) ; et
**en ce que** le déplacement du galet de guidage de câbles (26, 28) a lieu le long d'une direction inclinée vers le bas et le mécanisme (30) comprend :
- une structure de support (40) fixée sur le coulisseau (18, 20) ;
- deux barres (42) situées sur les deux côtés opposés du galet de guidage de câbles (26, 28) et conçues pour coulisser à l'intérieur de sièges correspondants (46) prévus dans la structure de support (40) et supportant ledit galet de guidage de câbles (26, 28) ;
les deux barres (42) étant inclinées vers le bas de sorte que, lorsque les barres (42) sont extraites, l'angle de tangence des câbles avec le galet de guidage de câbles reste constant et, ainsi, l'arc d'enroulement reste également constant.

2. Armature à câbles multiples (12) selon la revendication 1, **caractérisée en ce qu'**elle comprend deux tambours à rainures multiples (22, 24), c'est-à-dire un tambour à entraînement par moteur et un tambour de transmission porteur, chacun prévus sur l'un des coulisseaux (18, 20).

3. Armature à câbles multiples (12) selon la revendication 2, **caractérisée en ce qu'**elle comprend un troisième galet situé au niveau du sommet d'un triangle et ayant, en plus d'une fonction de transmission, également une fonction de tension de câbles.

4. Armature à câbles multiples (12) selon la revendication 1, **caractérisée en ce qu'**elle comprend quatre tambours à rainures multiples (22, 24), avec deux tambours à rainures multiples prévus sur chaque coulisseau (18, 20) de sorte que les quatre galets à rainures multiples soient positionnés aux angles d'un rectangle.

5. Armature à câbles multiples (12) selon la revendication 1, **caractérisée en ce que** les deux galets de guidage de câbles à rainures multiples (26, 28) sont équipés du mécanisme à entraînement par moteur (30) qui permet le déplacement du galet de guidage de câbles (26, 28) vers ou à l'écart du tambour à rainures multiples respectif (22, 24).

6. Armature à câbles multiples (12) selon la revendication 1, **caractérisée en ce que** les deux barres (42) sont cylindriques.

7. Armature à câbles multiples (12) selon la revendication 1, **caractérisée en ce que** les deux barres (42) sont prévues dans la direction transversale.

8. Armature à câbles multiples (12) selon la revendication 1, **caractérisée en ce que** le mécanisme (30) pour chaque barre (42) comprend un rack (48) et un moteur à engrenages (52) conçu pour faire fonctionner un pignon (50) qui s'engrène avec le rack et prévu sur la structure de support.

9. Armature à câbles multiples (12) selon la revendication précédente, **caractérisée en ce que** les moteurs à engrenages (52) sont conçus pour fonctionner de manière synchronisée.

10. Armature à câbles multiples (12) selon la revendication 1, **caractérisée en ce qu'**un support (56) destiné au galet de guidage de câbles (26, 28) est monté sur l'extrémité libre de chaque barre (42) de manière pivotante autour de son axe et autour d'un axe perpendiculaire à celui-ci.

11. Armature à câbles multiples (12) selon l'une quelconque des revendications précédentes, **caractérisée en ce qu'**elle comprend un moyen de détection capable de détecter la taille et la position du bloc.

12. Armature à câbles multiples (12) selon la revendication 11, **caractérisée en ce qu'**elle comprend une unité de commande intégrée à la machine et conçue pour régler automatiquement la distance des galets de guidage de câbles par rapport au bloc à découper.
